# EUROPÄISCHE PATENTSCHRIFT

(11) **EP 1 331 112 B1**
(45) Veröffentlichungstag und Bekanntmachung des Hinweises auf die Patenterteilung: **11.01.2006**
(21) Anmeldenummer: 03000945.0
(22) Anmeldetag: 16.01.2003
(51) Int. Cl.: B60H 1/00

(54) **Heizungs- oder Klimaanlage für ein Kraftfahrzeug mit integrierter Steuereinheit**
Heating- or Air-Conditioning System for a vehicle with integrated control unit
Système de chauffage ou de climatisation pour véhicule avec unité de commande intégrée

(30) Priorität: 26.01.2002 DE 10202968
(43) Veröffentlichungstag der Anmeldung: 30.07.2003
(73) Patentinhaber: Behr GmbH & Co. KG, 70469 Stuttgart (DE)
(72) Erfinder: Ghussein, Luay, Dipl.-Ing., 70374 Stuttgart (DE); Kreuzer, Walter, 71229 Leonberg (DE); Otto, Jürgen, Dipl.-Ing. (FH), 75428 Illingen (DE); Pubri, Harald, Dipl.-Ing.(FH), 70437 Stuttgart (DE); Schmadl, Dieter, Dipl.-Ing., 71672 Marbach (DE)
(74) Vertreter: Grauel, Andreas

(56) Entgegenhaltungen:
- EP-A- 0 644 379
- DE-A- 3 105 430
- DE-A- 10 023 847
- GB-A- 2 343 164

## Beschreibung

Die Erfindung betrifft eine Heizungs- oder Klimaanlage für ein Kraftfahrzeug gemäß dem Oberbegriff des Anspruchs 1.

Heutige Fahrzeugklimaanlagen werden über ein Steuergerät gesteuert bzw. geregelt, das als bauliche Einheit mit einer Bedieneinheit, die in der Mittelkonsole bzw. in der Armaturentafel angeordnet ist, ausgebildet ist. Das Bedien- und Steuergerät weist Bedienelemente, wie Schalter, Taster, Drehknöpfe usw., auf, über die Benutzereinstellungen, wie gewünschte Temperatur, gewünschte Luftverteilung etc., eingebbar sind. Die eingegebenen Signale werden in dem Steuergerät elektronisch verarbeitet und über elektrische Verbindungen dem Klimagerät, das ein Luftführungsgehäuse mit darin angeordneten Filter, Wärmetauscher, Luftstromsteuerelementen, Aktoren und gegebenenfalls Sensoren umfasst, zugeführt. Über einen Kabelbaum sind die elektrischen Komponenten des Klimageräts, wie Sensoren und Aktoren, beispielsweise Schrittverstellmotoren für die Luftstromsteuerelemente sowie das Gebläse, elektrisch miteinander verbunden.

Wichtige Faktoren bei der Konstruktion von Klimaanlagen sind einerseits der Bauraum den die Klimaanlage im Fahrzeug einnimmt und andererseits die Kosten zur Herstellung von Klimaanlagen. Heutzutage werden vermehrt Aktoren eingesetzt, um Luftklappen zu betätigen, sowie vermehrt Sensoren zur Überwachung verschiedenster Funktion, beispielsweise Überwachung von Temperaturen, beispielsweise der Verdampfertemperatur zur Vermeidung einer Verdampfervereisung, Überwachung von Luftstromgeschwindigkeiten, Überwachung der Luftgüte (Partikel, Schadstoffe, Geruchsstoffen), etc., eingesetzt. Die Aktoren und Sensoren bringen insgesamt einen erhöhten Verkabelungsaufwand und damit einhergehende Kosten mit sich. Der vermehrte Einsatz elektronischer Komponenten führt weiter zu einem sehr hohen Kommunikationsaufwand, z.B. über Bussysteme, so dass entsprechende Priorisierungen und Echtzeitbearbeitungen immer schwieriger werden und die Störanfälligkeit wächst.

Ferner ist aus der nachveröffentlichten DE 100 39 576 A1 bekannt, die Steuerelektronik unmittelbar in der Nähe des Luftführungsgehäuses anzuordnen. Damit ist die bauliche Einheit zwischen Bediengerät und Steuergerät aufgehoben und die Steuerelektronik von dem Bediengerät in bzw. an das Klimagehäuse verlagert, also dorthin verlagert, wo die Luft konditioniert und temperiert wird.

DE 100 23 847 A1 zeigt eine Klimaanlage gemäß dem Oberbegriff des Anspruchs 1.

Es ist Aufgabe der Erfindung eine vorbekannte Heizungs- oder Klimaanlage zu verbessern.

Diese Aufgabe wird gelöst durch eine Heizungs- oder Klimaanlage mit den Merkmalen des Anspruchs 1.

Erfindungsgemäß ist die Steuerelektronik an oder in den Komponenten der Heizungs- bzw. Klimaanlage in einem taschenartigen Einschub integriert angeordnet. Damit ist die bisher übliche bauliche Einheit zwischen Bediengerät und Steuergerät aufgehoben und die Steuerelektronik von dem Bediengerät in bzw. an das Gehäuse der Heizungs- bzw. Klimaanlage verlagert, also dorthin verlagert, wo die Luft konditioniert und temperiert wird. Durch die Verlegung der Steuerelektronik kann das Bediengerät jetzt erheblich kleiner gebaut werden, da es im wesentlichen lediglich nur noch zum Halten der einzelnen Bedienelemente dient, kann Bauraum geschaffen werden für andere Komponenten, beispielsweise Spracheingabemodul, CD-Spieler, Navigationsgerät oder dergleichen Geräte.

Die gesamte Steuerung der einzelnen Aktoren und elektrischen Komponenten der Klimaanlage wird von der Steuerelektronik vorgenommen, die unmittelbar an der Klimaanlage, d.h. insbesondere integriert in einer der Komponenten derselben angeordnet ist. Eine derartige Klimaanlage kann in unterschiedlichen Fahrzeugen eingesetzt werden, da die verschiedenen Bediengeräte für die unterschiedlichen Fahrzeuge in einfachster Weise mit der die Steuerelektronik enthaltenen Klimaanlage in einfachster Weise verbindbar ist. Wenn die Steuerelektronik programmierbar ist, können in die unterschiedlichen Fahrzeuge Klimaanlagen mit verschiedenen Funktionen eingesetzt werden, wobei diese Funktionen lediglich softwaremäßig der Klimaanlage mit ihrer Steuerelektronik einprogrammierbar sind. Es kann dadurch eine erheblich höhere Standardisierung und damit Kosteneinsparung erreicht werden. Die Variantenbildung geschieht im wesentlichen softwaremäßig. Verschiedene Klimaanlagen besitzen zwar den gleichen Aufbau, weisen aber unterschiedliche Funktionen auf.

Erfindungsgemäß wird ein taschenartiger Einschub bereits bei der Herstellung des entsprechenden Bauteiles in einer Gehäusewand ausgebildet sein. Hierbei kann die Steuerelektronik am oder im Gebläse bzw. am oder im Gebläsegehäuse angeordnet sein.

An der Platine, welche die Steuerelektronik trägt, ist eine Abdeckung für den Einschub vorgesehen sein, so dass die Öffnung des Einschubes durch das ordnungsgemäße Einschieben der Platine verschlossen wird. Gemäß einer bevorzugten Ausführungsform weist die Abdeckung eine integrierte Steckbuchse oder einen integrierten Stecker auf.

Die Steuerelektronik kann femer am Filterdeckel oder am Filtergehäuse angeordnet sein. Die Anordnung am Filterdeckel bietet den Vorteil, dass nur ein kleines Bauteil geändert werden muss und kein Zusatzteil erforderlich ist. Eine Beeinträchtigung durch eine Filterwechsel erfolgt nicht. Die Anordnung im Filtergehäuse, insbesondere in einer Zwischenwand von zwei Filtern, ist besonders vorteilhaft, da kein spezielles Gehäuse oder eine Abdekkung erforderlich ist. Ferner werden die elektronischen Bauteile automatisch gekühlt.

Die Steuerelektronik kann aus einzelnen Untereinheiten bestehen, die an verschiedenen Stellen der Anlage angeordnet sein können. So kann beispielsweise eine Gebläsesteuereinheit an dem Gebläsegehäuse und eine Steuereinheit für die Luftstromsteuerelemente im Bereich der Aktoren, die in der Luftverteilung angeordnet sind, angeordnet sein.

Besonders vorteilhaft ist die eine Anordnung der Steuerelektronik, bei der sie senkrecht zum Gehäuse zugänglich ist, wodurch die Montage und gegebenenfalls erforderliche Wartungsarbeiten erleichtert werden.

Die Steuerelektronik kann eine starre Platine umfassen oder eine flexible Platine, die dann in geeigneter Weise, beispielsweise durch Kleben, an dem Gehäuse festlegbar ist. Eine starre Platine hat den Vorteil, dass diese besser handhabbar ist.

Im folgenden wird die Erfindung anhand mehrerer Ausführungsbeispiele unter Bezugnahme auf die Zeichnung im Einzelnen erläutert. In der Zeichnung zeigen:
- Fig. 1 bis 4: Ausführungsformen einer erfindungsgemäßen Klimaanlage in vier perspektivischen, teilweise explosionsartigen Darstellungen;
- Fig. 4a: eine explosionsartige Detaildarstellung eines Filtergehäuses und der Steuerelektronik von Fig. 4; und
- Fig. 5 bis 7: Nicht erfindungsgemäße Blockschaltbilder zur Steuerung einer Klimaanlage.

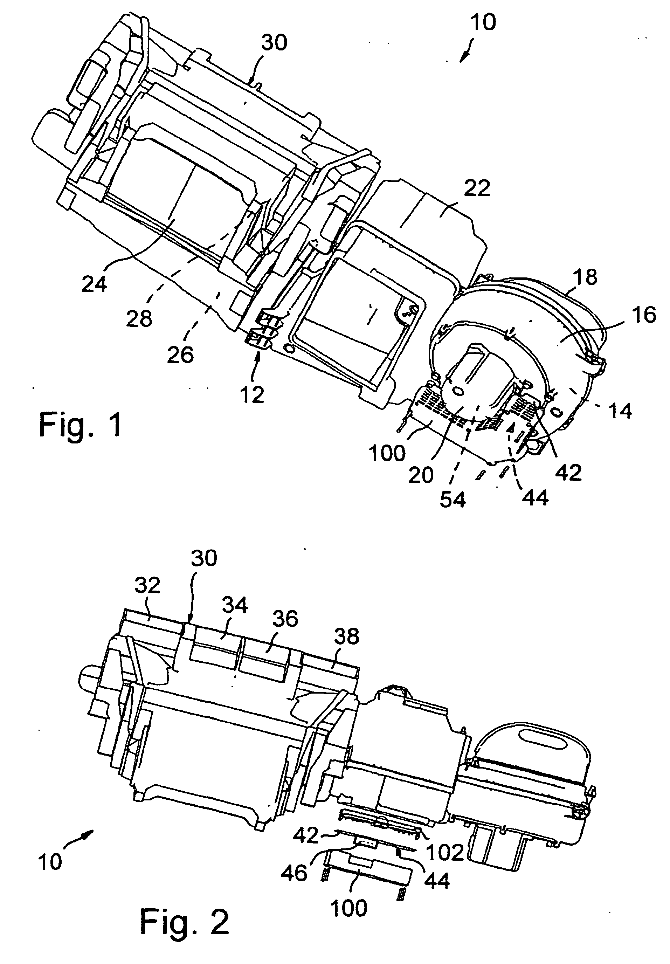

Eine Klimaanlage 10 ist in den Fig. 1 bis 4 in verschiedenen Ausführungsformen dargestellt, wobei die Grundform im wesentlichen übereinstimmt, so dass gleiche und gleich wirkende Bauteile mit gleichen Bezugszeichen versehen sind. Die Klimaanlage 10 weist ein Luftführungsgehäuse 12 auf, in bzw. an dem verschiedene Komponenten der Klimaanlage angeordnet sind. In den Figuren 1 bis 4 sind lediglich perspektivische Ansichten einer solchen Klimaanlage dargestellt, so dass die im Inneren des Luftführungsgehäuses gelegenen Komponenten nicht erkennbar sind. Die Klimaanlage 10 ist in an sich bekannter Weise aufgebaut. Ein Gebläse 14 ist in einem Gebläsegehäuse 16, das ein Laufrad des Gebläses 14 umgibt, angeordnet. Luftstromseitig vor dem Gebläse ist ein Luftansaugtrakt 18 angeordnet und ein Gebläsemotor 54 ist in einem Gebläsemotorhalter 20 gehalten. An das Gebläsegehäuse 16 schließt sich ein Filtergehäuse 22 an, in dem ein oder mehrere Filter zur Reinigung der geförderten Luft angeordnet sein können. An das Filtergehäuse 22 schließt sich ein Lufttemperiergehäuse 24 an, in dem ein Verdampfer 26 und ein Heizkörper 28 zur Kühlung und Aufheizung der Luft angeordnet sind. An das Lufttemperiergehäuse 24 schließt sich ein Luftverteilgehäuse 30 an, in dem die Luft auf die verschiedenen Luftauslässe 32, 34, 36 und 38 verteilt wird. Die Luftauslässe sind über Luftklappen, beispielsweise Jalousieklappen, verschließbar. Die einzelnen Luftklappen und auch die innerhalb des Lufttemperierungsgehäuses 24 und innerhalb des Luftverteilgehäuses 30 angeordneten und in den Figuren nicht sichtbaren Klappen sind über Aktoren, beispielsweise Schrittverstellmotoren, betätigbar.

Der Verdampfer 26 ist in nicht dargestellter Weise in einen Kältemittelkreis, bestehend aus über Kältemittelleitungen verbundenem Kältemittelverdichter, Kältemittelkondensator und Expansionsventil, eingebunden.

Weiter umfasst die Klimaanlage eine Bedieneinheit 80, die in erreichbarer Nähe eines Benutzers des Fahrzeuges, vorzugsweise einer Instrumententafel oder einer Mittelkonsole, angeordnet ist und über die gewünschte Temperaturvorgaben und gewünschte Luftverteilungs- und Luftmengenvorgaben eingebbar sind. Die Bedieneinheit 80 ist über elektrische Leitungen und/oder Lichtleiter mit einer auf einer Platine 42 angeordneten Steuerelektronik 44 verbunden, in der von der Bedieneinheit 80 kommende Steuersignale verarbeitet werden. Die Steuersignale von der Bedieneinheit 80 werden in der Steuerelektronik 44 verarbeitet und daraufhin die entsprechenden Komponenten der Klimaanlage 10 entsprechend angesteuert, wie im Näheren weiter unten beschrieben ist.

Die auf der festen Platine 42 angeordnete Steuerelektronik 44 ist, gemäß der in Fig. 1 dargestellten ersten Ausführungsform, direkt am Gebläsegehäuse 16 neben dem Gebläsemotor 54 angebracht und wird von einer mittels Schrauben befestigten Abdeckung 100 geschützt. Durch die Anbringung am Gebläsegehäuse 16 ist kein zusätzliches Teil zur Befestigung erforderlich, vielmehr kann ein vorhandenes Teil, nämlich das Gebläsegehäuse 16, entsprechend abgeändert werden. Aufgrund der Nähe zum Gebläseregler 14a, insbesondere aber aufgrund der relativ guten senkrechten Zugänglichkeit bei Wartungsarbeiten, bietet diese Anordnung Vorteile.

Fig. 2 zeigt eine Anordnung, die nicht Teil des Erfindung ist. Es erfolgt eine Anbringung der festen Platine 42 mitsamt der Steuerelektronik 44 einschließlich eines Steckers 46 an einem Filterdeckel 102. Die Steuerelektronik 44 wird von einer mittels Schrauben befestigten Abdeckung 100 geschützt. Entsprechend der ersten Ausführungsform sind die Änderungen auf den Filterdeckel 102 beschränkt. Aufgrund der Nähe zum Gebläseregler 14a, aber insbesondere aufgrund der relativ guten senkrechten Zugänglichkeit bei Wartungsarbeiten bietet diese Anordnung entsprechende Vorteile.

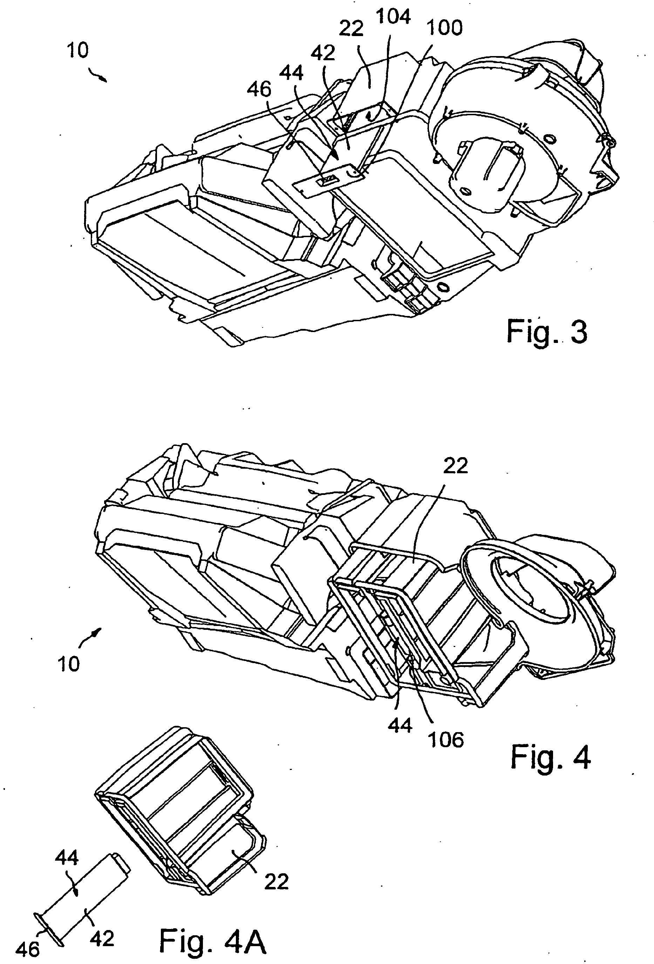

Fig. 3 zeigt eine zweite Ausführungsform für die Anbringung der Platine 42 mit der Steuerelektronik 44. Hierfür ist am Filtergehäuse 22 ein taschenartiger Einschub 104 vorgesehen, in den die Platine 42, welche mit der Steuerelektronik 44 und dem Stecker 46 versehen ist, senkrecht eingeschoben wird. Um den Stecker 46 herum ist eine Abdeckung 100 ausgebildet, welche den Einschub 104 in zusammengebautem Zustand verschließt. Der Einschub 104 ist - gemäß der dargestellten Ausführungsform - einstückig mit dem Filtergehäuse 22 ausgebildet, kann jedoch auch nachträglich am Filtergehäuse 22 angebracht werden. Auch bei der zweiten Ausführungsform entspricht die Einbaurichtung den Einbaurichtungen der vorhergehenden Ausführungsformen, so dass relativ eine gute Zugänglichkeit gewährleistet ist. Wiederum ist die Steuerelektronik 44 in der Nähe des Gebläsereglers 14a angeordnet.

Gemäß einer dritten Ausführungsform, die in den Figuren 4 und 4A dargestellt ist, ist die Platine 42 mit der Steuerelektronik 44 in eine Zwischenwand 106 im Filtergehäuse 22 integriert. Hierbei ist das Filtergehäuse 22 teilweise offen dargestellt. Direkt an der Platine 42 ist ein Stecker 46 vorgesehen. Die Abdeckung 100 wird gemäß der dritten Ausführungsform durch den Filterdeckel (nicht dargestellt) gebildet. Die Montagerichtung entspricht derjenigen der zuvor beschriebenen Ausführungsformen, wobei die Montage nach der Entfernung des Filterdeckels erfolgt. Eine derartige Anordnung in der Zwischenwand 106 der beiden Filter erfordert kein zusätzliches Gehäuse oder eine zusätzliche Abdeckung. Ferner werden die elektronischen Bauteile aufgrund der Anordnung automatisch gekühlt, und wiederum ist die Steuerelektronik 44 in der Nähe des Gebläsereglers 14a angeordnet.

Sämtliche elektronischen Komponenten, die in oder an dem Luftführungsgehäuse 12 angeordnet sind, sind über nicht dargestellte elektrische Leitungen miteinander verbunden, wobei die Leitungen als Flachbandkabel ausgebildet sind, die auf das Gehäuse 12 aufklebbar sind. Alternativ können die Leitungen auch als Folienleiterbahnen ausgebildet sein, die ebenfalls auf das Gehäuse 12 aufklebbar sind. Alternativ können die Leitungen auch als Lichtwellenleiter ausgebildet sein, die ebenfalls auf das Gehäuse 12 aufklebbar sind. Alternativ können die Leitungen auch als Stanzgitter ausgebildet sein, das von dem Kunststoffmaterial des Gehäuses 12 umgeben ist, wobei das Stanzgitter in dem Herstellungsverfahren für das Gehäuse 12 in die Gehäusewände mit eingespritzt ist.

Sämtliche Aktoren sowie etwaige Sensoren, wie beispielsweise ein Verdampfertemperatursensor, der die Lufttemperatur nach dem Verdampfer misst, sind derart ausgebildet, dass sie beim Einstecken in das Gehäuse 12 gleichzeitig mit den Leitungen kontaktiert werden, so dass die Einstecköffnung in das Gehäuse 12 gleichzeitig einen Stecker zur Herstellung der elektrischen Kontakte darstellt.

Die Steuerelektronik 44 kann auch aus einzelnen Untereinheiten, die separat an unterschiedlichen Stellen der Klimaanlage 10 angeordnet sein können, bestehen.

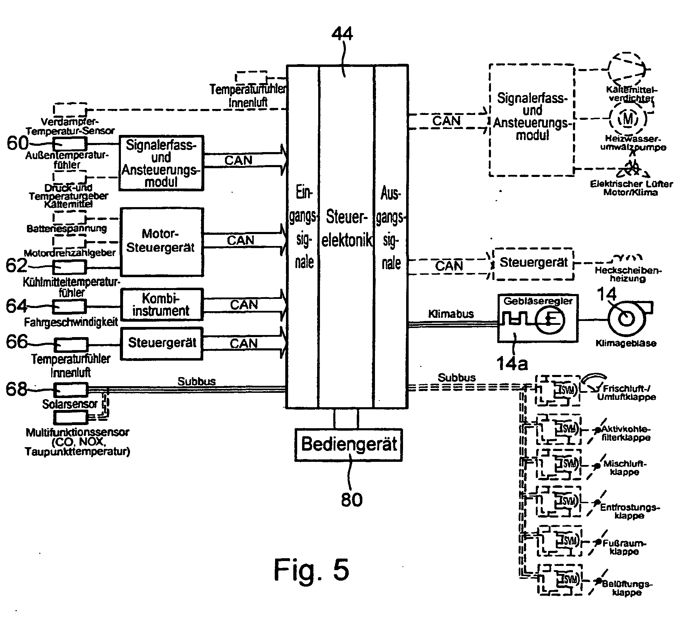

Die einzelnen Untereinheiten, die in ihrer Funktion weiter unten unter Bezugnahme auf die Fig. 5 bis 7 erläutert werden, können eine Gebläsesteuereinheit, eine Luftgütesteuereinheit, eine Verdampfertemperatursteuereinheit sowie eine Luftverteilsteuereinheit sein.

Die nicht erfindungsgemäßen Figuren 5 bis 7 zeigen identische Blockschaltbilder zur Steuerung einer Klimaanlage 10, wobei in den Figuren jeweils zu einer Untereinheit funktional zusammengehörende Elemente fett gedruckt dargestellt sind. Diese Zusammenhänge sind lediglich beispielhaft und könnten weitere Elemente und/oder Signale umfassen. Die unten beschriebenen Funktionsweisen sind ebenfalls nur beispielhaft. Weitere Funktionen der einzelnen Untereinheiten sind denkbar.

So umfasst gemäß Fig. 5 beispielsweise die Gebläsesteuereinheit ausgangsseitig das Gebläse 14 und einen Gebläseregler 14a, der selbstverständlich die Leistungselektronik 48 umfasst, sowie eingangsseitig einen Außentemperaturfühler 60, einen Kühlmitteltemperaturfühler 62, eine Fahrgeschwindigkeitsmesser 64, einen Innenraumtemperaturfühler 66 und einen Solarsensor 68, sowie entsprechende funktionale Bereiche der Steuerelektronik 44. Über die Bedieneinheit 80 kann die Gebläsestärke entweder manuell oder in einem einschaltbaren Automatikmodus von der Steuerelektronik eingestellt werden. Im Automatikmodus wird die Ansteuerung des Gebläses maßgeblich von der Differenz zwischen Innenraum-Solltemperatur und Inneraum-Isttemperatur bestimmt. Bei starker Abweichung wird die Gebläsestärke erhöht. Davon abweichend wird die Gebläsestärke reduziert, wenn beispielsweise die Kühlwassertemperatur unter 50°C beträgt und die Klimaanlage im Modus "Heizen" betrieben wird oder wenn die Fahrgeschwindigkeit erhöht wird. Die Gebläsestärke kann erhöht werden, wenn die Sonneneinstrahlung zunimmt. Weiter Abweichungen von der "normalen" Gebläseregelung wären denkbar, wenn beispielsweise eine bestimmte Klappenstellung eingestellt ist oder das Gebläse je nach Außentemperatur einen Offset erhält.

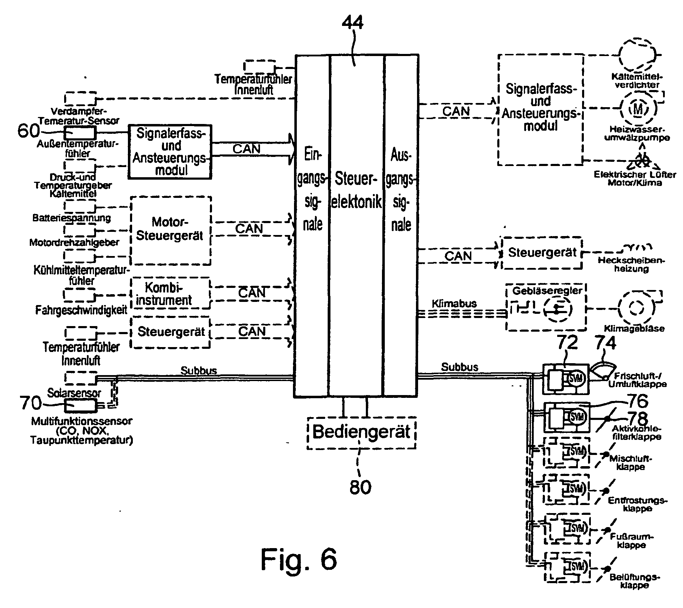

In Fig. 6 ist eine Luftgütesteuereinheit durch Fettdruck der entsprechenden Komponenten dargestellt, wobei diese Einheit den Außentemperaturfühler 60 sowie einen Multifunktionssensor 70, der beispielsweise Schadstoffe, wie CO, CO₂, NOₓ, Schwebstoffe (Ruß, Staub), Geruchsstoffe detektiert und ausgangsseitig die Ansteuerung eines Aktors 72 für eine Frischluft-/Umluftklappe sowie einen Aktor 76 für eine Filterklappe 78 und entsprechende Elemente der Steuerelektronik 44 umfasst. Die Luftgütesteuereinheit kann in einem einschaltbaren Automatikmodus unabhängig von den Eingaben des Bediengerätes 80 arbeiten, so dass unabhängig von den Vorgaben durch das Bediengerät 80 stets eine optimale Luftgüte gewährleistet ist. In diesem Modus wird z.B. bei hohen Außentemperaturen der Umluftanteil variiert, um den Fahrgastraum schneller und mit weniger Kühlleistungsbedarf abkühlen zu können, ohne das im Fahrgastraum die Luftqualität beeinträchtigt ist. Bei hohen Schadstoffbelastungen der Außenluft wird in den Umluftbetrieb geschaltet. Eine Rückschaltung in den Frischluftbetrieb kann nach einer vorprogrammierten Zeitspanne automatisch in Abhängigkeit der Außentemperatur erfolgen.

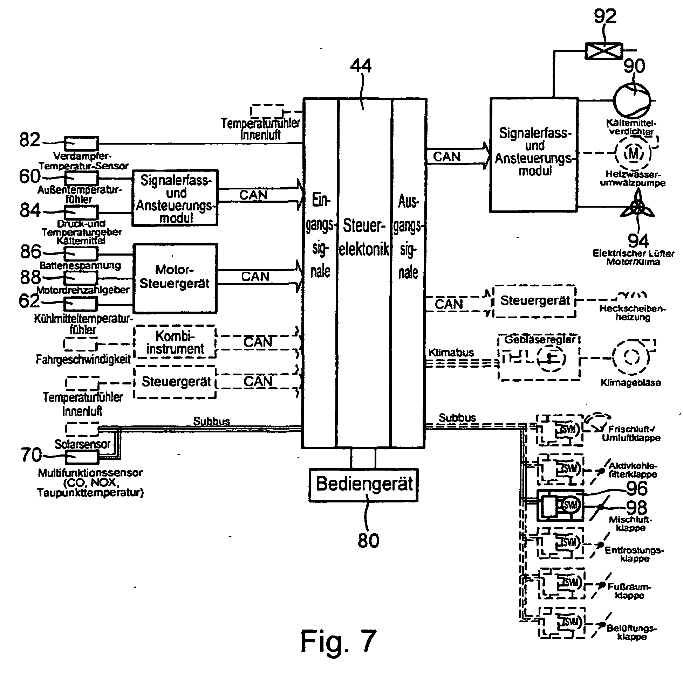

In Fig. 7 sind durch Fettdruck die Komponenten dargestellt, die funktional zu einer Verdampfertemperatursteuereinheit zusammenfassbar sind. Diese umfassen einen Verdampfertemperatursensor 82, den Außentemperaturfühler 60, einen Druck- und Temperaturgeber 84 für das Kältemittel, einen Batteriespannungssensor 86, einen Motordrehzahlgeber 88, den Kühlmitteltemperaturfühler 62 sowie den Multifunktionssensor, Schadstoffsensor 70. Ausgangsseitig umfasst die Verdampfertemperaturregelung den Kältemittelverdichter 90, gegebenenfalls ein thermostatisches Expansionsventil 92 und ein nicht dargestelltes Heizungsventil, einen elektrischen Lüfter 94, der Luft durch den Kondensator des Kältemittelkreises fördert, sowie einen Aktor 96, der eine Luftmischklappe 98 betätigt, die in dem Lufttemperierungsgehäuse 24 angeordnet ist. Wenn der Kühlbetrieb eingeschaltet ist, kann die Verdampfertemperaturregelung verschiedene Aufgaben erfüllen. Bei einer relativen Luftfeuchte von beispielsweise 0 bis 50 % wird die Mischluftklappe derart eingestellt, dass die Klimaanlage nicht in einem Reheatbetrieb betrieben wird. Bei einer relativen Luftfeuchte von beispielsweise 50 bis 85 % findet ein geringer Reheatbetrieb mit gleitender Verdampfertemperaturregelung zwischen beispielsweise 0 und 12°C statt und bei einer relativen Luftfeuchte von beispielsweise 85 bis 100 % findet voller Reheatbetrieb statt. Die Verdampfertemperatur wird auf einen minimalen Wert geregelt. Mit den zu der Verdampfertemperaturregelung gehörenden funktionalen Einheiten lässt sich auch eine Kältemittel-Füllstandsüberwachung durchführen, indem aus dem über den Geber 84 ermittelten Druck und Temperatur des Kältemittels nach dem Verdichter anhand einer in der Steuerelektronik 44 hinterlegten Kurve, der Kältemittelstand rechnerisch ermittelt und bei zu geringem Füllstand der Kühlbetrieb zum Schutz der Klimaanlage verlassen wird.

### Bezugszeichenliste

- 10: Klimaanlage
- 12: Luftführungsgehäuse
- 14: Gebläse
- 14a: Gebläseregler
- 16: Gebläsegehäuse
- 18: Luftansaugtrakt
- 20: Gebläsemotorhalter
- 22: Filtergehäuse
- 24: Lufttemperiergehäuse
- 26: Verdampfer
- 28: Heizkörper
- 30: Luftverteilgehäuse
- 32,: 34, 36, 38 Luftauslass
- 42: Platine
- 44: Steuerelektronik
- 46: Stecker
- 48: Gebläseleistungselektronik
- 50: Leistungstransistor
- 52: Nebenluftansaugkanal
- 54: Gebläsemotor
- 60: Außentemperaturfühler
- 62: Kühlmitteltemperaturfühler
- 64: Fahrgeschwindigkeitsmesser
- 66: Innenraumtemperaturfühler
- 68: Solarsensor
- 70: Multifunktionssensor, Schadstoffsensor
- 72: Aktor
- 76: Aktor
- 78: Filterklappe
- 80: Bedieneinheit
- 82: Verdampfertemperatursensor
- 84: Druck- und Temperaturgeber
- 86: Batteriespannungssensor
- 88: Motordrehzahlgeber
- 90: Kältemittelverdichter
- 92: Expansionsventil
- 94: Lüfter
- 96: Aktor
- 98: Luftmischklappe
- 100: Abdeckung
- 102: Filterdeckel
- 104: Einschub
- 106: Zwischenwand

## Patentansprüche

1. Heizungs- oder Klimaanlage für ein Kraftfahrzeug mit einem Luftführungsgehäuse (12), in und/oder an dem Komponenten der Anlage angeordnet sind, wobei die Komponenten Gebläse (14), gegebenenfalls Filter, wenigstens einen Wärmetauscher, Luftstromsteuerelemente, Aktoren und gegebenenfalls Sensoren umfassen und mit einer Steuerelektronik (44), in die von einer Bedieneinheit (80) Steuersignale eingebbar sind und die Steuerelektronik (44) über elektrische Leitungen und/oder Lichtleiter mit wenigstens einigen der Komponenten der Anlage verbunden ist, wobei die Steuerelektronik (44) an oder in den Komponenten der Anlage (10) integriert angeordnet ist, **dadurch gekennzeichnet, dass** die Steuerelektronik (44) in einem taschenartigen Einschub (104) angeordnet ist, welcher in einer Gehäusewand ausgebildet ist.

2. Anlage nach Anspruch 1, **dadurch gekennzeichnet, dass** die Steuerelektronik (44) am Gebläse (14) oder am Gebläsegehäuse (16) angeordnet ist.

3. Anlage nach Anspruch 1 oder 2, **dadurch gekennzeichnet, dass** die Steuerelektronik (44) eine Abdeckung (100) für den Einschub (104) aufweist.

4. Anlage nach Anspruch 3, **gekennzeichnet durch** eine in die Abdekkung (100) integrierte Steckbuchse (46) oder einen integrierten Stekker.

5. Anlage nach zumindest einem vorhergehenden Anspruch, **dadurch gekennzeichnet, dass** die Steuerelektronik (44) am Filterdeckel (102) angeordnet ist.

6. Anlage nach zumindest einem vorhergehenden Anspruch, **dadurch gekennzeichnet, dass** die Steuerelektronik (44) im Filtergehäuse (22) angeordnet ist.

7. Anlage nach Anspruch 6, **dadurch gekennzeichnet, dass** die Steuerelektronik (44) in einer Zwischenwand (106) zweier Filter integriert ist.

8. Anlage nach einem der vorhergehenden Ansprüche, **dadurch gekennzeichnet, dass** die Steuerelektronik (44) derart angeordnet ist, dass sie senkrecht zugänglich ist.

9. Anlage nach einem der vorhergehenden Ansprüche, **dadurch gekennzeichnet, dass** die Steuerelektronik (44) auf einer festen Platine (42) angeordnet ist.

## Claims

1. Heating or air conditioning system for a motor vehicle, with an air duct housing (12) wherein and/or whereon the components of the system are located, said components including fans (14), possibly filters, at least one heat exchanger, airflow control elements, actuators and possibly sensors, and with an electronic control unit (44) into which control signals from a control panel can be input, the electronic control unit (44) being connected to at least some of the system components by electric lines and/or optical waveguides and the electronic control unit (44) being integrally mounted on or in the system components (10), **characterised in that** the electronic control unit (44) is located in a pocket-like plug-in module (104) provided in one of the housing walls.

2. System according to claim 1, **characterised in that** the electronic control unit (44) is mounted on the fan (14) or on the fan housing (16).

3. System according to claim 1 or 2, **characterised in that in that** the electronic control unit (44) incorporates a cover (100) for the plug-in module (104).

4. System according to claim 3, **characterised by** a socket (46) or a plug integrated into the cover (100).

5. System according to at least one of the preceding claims, **characterised in that** the electronic control unit (44) is mounted on the filter cover (102).

6. System according to at least one of the preceding claims, **characterised in that** the electronic control unit (44) is located in the filter housing (22).

7. System according to claim 6, **characterised in that** the electronic control unit (44) is integrated into a partition (106) between two filters.

8. System according to at least one of the preceding claims, **characterised in that** the electronic control unit (44) is arranged to be vertically accessible.

9. System according to at least one of the preceding claims, **characterised in that** the electronic control unit (44) is mounted on a fixed printed circuit board (42).

## Revendications

1. Système de chauffage ou de climatisation pour un véhicule automobile, comprenant un carter de passage d'air (12) dans et/ou sur lequel sont disposés des composants du système, où les composants comprennent un ventilateur (14), le cas échéant des filtres, au moins un échangeur de chaleur, des éléments de commande d'écoulement d'air, des actionneurs et, le cas échéant, des capteurs, et comprenant une électronique de commande (44) à laquelle des signaux de commande peuvent être fournis par une unité de commande (80), et l'électronique de commande (44) est connectée via des conducteurs électriques et/ou des guides d'ondes optiques, à au moins certains des composants du système, où l'électronique de commande (44) est disposée en étant intégrée sur ou dans les composants du système (10), **caractérisé en ce que** l'électronique de commande (44) est disposée dans un logement (104) en forme de poche qui est configuré dans une paroi du carter.

2. Système selon la revendication 1, **caractérisé en ce que** l'électronique de commande (44) est disposée sur le ventilateur (14) ou sur le carter (16) du ventilateur.

3. Système selon la revendication 1 ou 2, **caractérisé en ce que** l'électronique de commande (44) présente une plaque de fermeture (100) pour le logement (104).

4. Système selon la revendication 3, **caractérisé par** une fiche femelle (46) intégrée dans la plaque de fermeture (100) ou par une prise mâle intégrée.

5. Système selon au moins une revendication précédente, **caractérisé en ce que** l'électronique de commande (44) est disposée sur le couvercle de filtre (102).

6. Système selon au moins une revendication précédente, **caractérisé en ce que** l'électronique de commande (44) est disposée dans le carter de filtre (22).

7. Système selon la revendication 6, **caractérisé en ce que** l'électronique de commande (44) est intégrée dans une paroi intermédiaire (106) de deux filtres.

8. Système selon l'une quelconque des revendications précédentes, **caractérisé en ce que** l'électronique de commande (44) est disposée de manière telle, qu'elle soit accessible verticalement.

9. Système selon l'une quelconque des revendications précédentes, **caractérisé en ce que** l'électronique de commande (44) est disposée sur une platine fixe (42).
